# DEMANDE DE BREVET EUROPEEN

(11) **EP 1 447 479 A1**
(43) Date de publication de la demande: **18.08.2004**
(21) Numéro de dépôt: 03290375.9
(22) Date de dépôt: 17.02.2003
(51) Int. Cl.: E02B 8/08

(54) **Passe à poissons comportant des éléments modulaires interconnectés par des orifices immergés et/ou des débordements**

(71) Demandeur: Gerin, Gerald, 94130 Nogent sur Marne (FR); Do Ngoc, Tran, 5853 Fentange (LU)
(72) Inventeur: Gerin, Gerald, 94130 Nogent sur Marne (FR); Do Ngoc, Tran, 5853 Fentange (LU)

(57) **Abrégé**

L'invention concerne un dispositif destiné à permettre aux espèces de poissons migrants de passer du bief aval au bief amont d'un aménagement fluvial.

Le dispositif est constitué de bacs modulaires, d'allure parallélépipédique, associés bout à bout selon un schéma "en escalier", accrochés latéralement de manière réversible et éventuellement réglable, à leur support (ouvrage principal ou support spécifique), et communiquant entre eux par des orifices et/ou échancrures calibrés ou calibrables destinés à freiner et contrôler l'écoulement.

## Description

La présente invention concerne au premier chef les dispositifs destinés à permettre aux espèces de poissons migrants de passer, par leurs propres moyens et en suivant leur instinct, du bief aval au bief amont d'un aménagement fluvial pour leur permettre d'atteindre leur lieu de reproduction, ainsi qu'à ménager l'option inverse aux jeunes de l'espèce, lorsqu'ils entreprennent le trajet opposé.
Il est fréquent que plusieurs espèces soient concernées sur un même cours d'eau, ce qui complique singulièrement la tâche de l'aménageur, limité aux procédés actuels, lesquels conduisent à privilégier une espèce lorsqu'ils sont fixes, ou atteignent des coûts prohibitifs lorsqu'ils sont pilotés.

Les principaux dispositifs actuellement utilisés sont de trois types.

Le premier présente les caractéristiques d'un canal ou grand fossé de pente modérée (15 % environ), équipé de chicanes et/ou de dispositifs rendant turbulent l'écoulement de l'eau, et ménageant des seuils déversants qui constituent autant de mini-cascades. Il s'agit des passes (ou "échelles") à poissons.
Le second est constitué par une ou plusieurs cuves, entraînée(s) par un dispositif élévateur (qui peut, selon la topographie et la dénivelée, relever du type ascenseur ou funiculaire), et connectée(s) successivement aux biefs aval / amont ou réciproquement.
Le troisième est du type écluse.

Les dispositifs du premier type ne donnent qu'à peu près satisfaction au plan piscicole, et présentent d'autres inconvénients :
- étant par nature fondés au sol, leur linéaire est de l'ordre de 6 à 8 fois la valeur de la dénivelée, ce qui suppose une emprise complémentaire à celle de l'ouvrage proprement dit.
- pour la même raison, et parce que non modulaires, ils ne sont pas adaptables à une variation de niveau des plans d'eau, qu'elle soit accidentelle ou le résultat d'une modification de l'aménagement. Il est donc nécessaire dans ce cas d'effectuer des travaux de génie civil, sur une emprise supplémentaire, pour les adapter à la nouvelle configuration. Les délais nécessaires peuvent rendre l'ouvrage inopérant pendant une ou plusieurs saisons de reproduction, ce qui est écologiquement très dommageable.
- leurs caractéristiques étant fixes, ils ne peuvent être conçus que pour l'espèce la plus représentée ou la mieux protégée, au détriment des autres, ou faire l'objet d'un compromis non totalement satisfaisant.

Les dispositifs du second type ont été utilisés pour franchir, au moins en théorie, des dénivellations importantes, mais, outre leur coût considérable, ils nécessitent la présence d'un opérateur, et n'ont guère prouvé leur efficacité : le poisson devant être "piégé" préalablement à son transfert et ceci à des époques non exactement prévisibles, leur rendement s'est avéré aléatoire.

Ceux du troisième type sont très peu fréquents, et présentent à peu près les mêmes inconvénients que ceux du second, tout en ne concernant que des dénivelées faibles et moyennes.

L'objet de l'invention est de réduire au minimum les inconvénients rencontrés dans les dispositifs du premier type, et de leur apporter des fonctionnalités nouvelles, sur les points suivants :
- diminution drastique de l'emprise au sol, qui devient ponctuelle (ou à la limite nulle, pour un dispositif ancré sur - ou à l'intérieur de - l'ouvrage à franchir).
- conception modulaire, justiciable de préfabrication et même de standardisation, entraînant une diminution corrélative des coûts de construction.
- adaptabilité aisée à des variations, même importantes, du plan d'eau amont.
- adaptabilité, au cours d'une même saison, à des espèces migrantes de caractéristiques différentes, tant en raison de leurs aptitudes physiques que de leurs habitudes.

L'invention, destinée principalement à faciliter les migrations de poissons sur les cours d'eau aménagés, ne se limite pas à cet objet, et peut servir également à contrôler la chute, par gravité, de tout fluide dont on cherche à calibrer les turbulences.

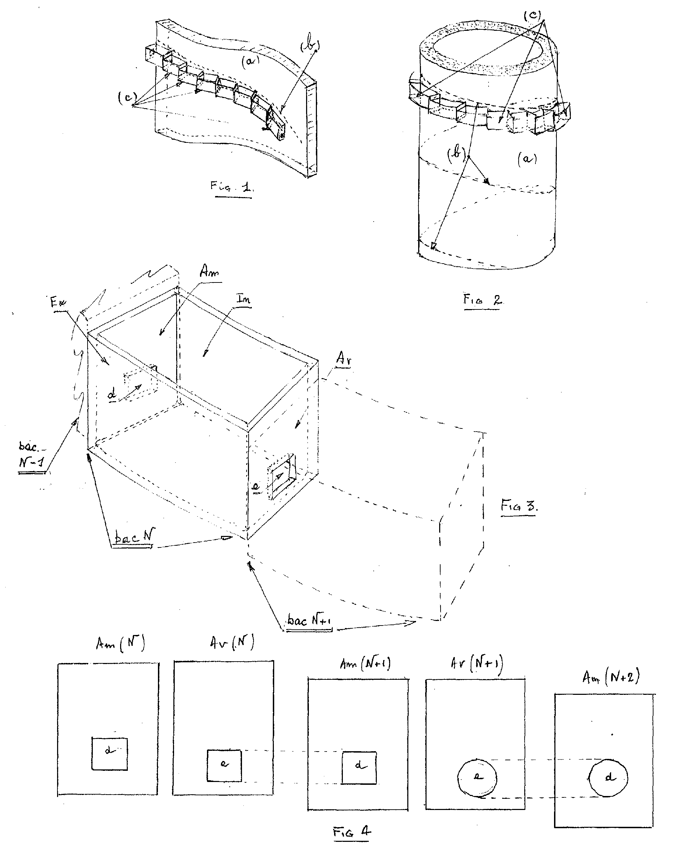

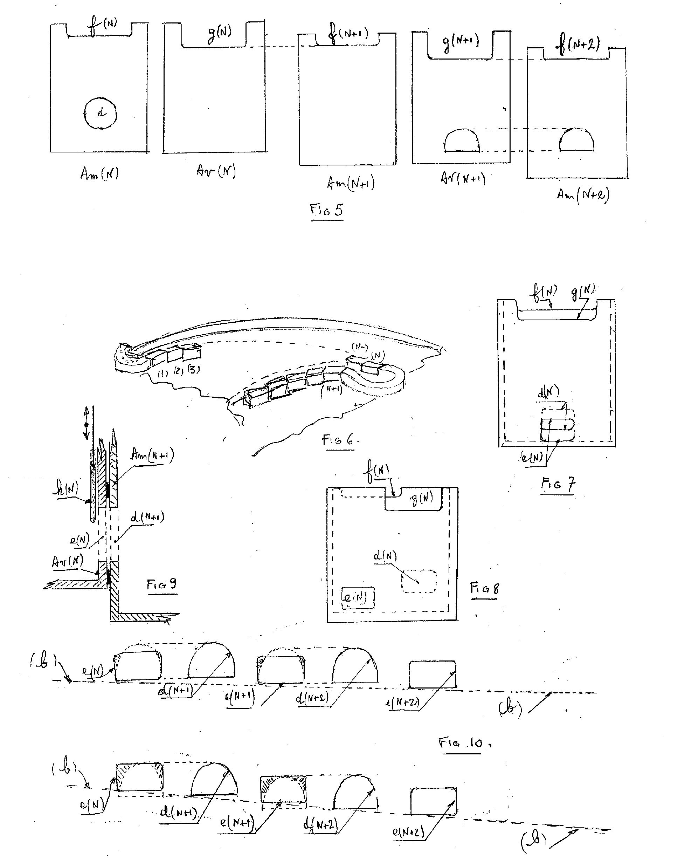

Le dispositif, selon l'invention, est caractérisé comme suit :
Sur un support de préférence, mais non nécessairement, prismatique et vertical (a) , dont la section horizontale peut prendre, mais pas nécessairement, la forme d'un polygone régulier, est fixée, tout au long d'une hélice directrice (b) pouvant faire plusieurs fois le tour du support s'il est à section fermée, une série de bacs (c) disposés en escalier et quasi-jointifs (figures 1 et 2).
Ces bacs, de section horizontale en général, mais non nécessairement, quadrangulaire, sont constitués d'un fond généralement horizontal et de quatre parois généralement verticales. Pour la commodité de l'exposé, le bac considéré sera numéroté N, le bac situé immédiatement à l'amont (N-1), et le bac situé immédiatement à l'aval (N+1).
   De la même manière, les parois seront nommées inférieure) pour celle adjacente au support, Am(ont) pour celle adjacente au bac (N-1), Extérieure) pour celle opposée au support, et Av(al) pour celle adjacente au bac (N+1), comme illustré par la figure 3.

La face Av du bac N est substantiellement parallèle à la face Am du bac (N+1), et ces faces sont disposées suffisamment près l'une de l'autre pour permettre, grâce à un système simple de joints ou de manchettes souples, de canaliser l'eau à travers des ouvertures (d) (e) situées en regard l'une de l'autre sur les dites faces (figure 4). Alternativement, ou simultanément, des échancrures (f) (g) situées à la partie supérieure des mêmes faces, et munies également de joints ou de goulottes, forment déversoir et permettent à tout ou partie du courant de former les mini- cascades recherchées en particulier par les salmonidés (figure 5).

La même description s'applique à tous les couples de faces Am/Av aussi bien vers l'amont du dispositif que vers l'aval.

Dans le cas d'un support à section fermée (colonne), le dispositif peut être indifféremment accroché à l'extérieur de celle-ci, ou à l'intérieur, sans changer, autrement que sur des points sans incidence sur l'invention (comme l'éclairage par exemple) les caractéristiques d'un ouvrage conforme à celle-ci.
En particulier, la colonne peut prendre la forme d'une cheminée ménagée à l'intérieur d'un ouvrage massif de retenue, comme un barrage en béton armé, ou être englobée dans un ouvrage tel qu'un barrage en enrochements.

Lorsque les bacs sont extérieurs à la colonne (fig.2), l'intérieur de celle-ci peut former réservoir et être relié hydrauliquemenr au bief ou réservoir amont, par un conduit ou un siphon s'alimentant de préférence au-dessous du niveau d'étiage. Il est alors aisé d'alimenter le dispositif à hauteur du bac le mieux placé par rapport au niveau du bief amont et au débit requis. Il suffit en effet de ménager des moyens de communication obturables, comme des manchettes munies de vannes, entre l'intérieur de la colonne-réservoir et la face (In) des bacs concernés.
L'ensemble de ce système de vannes peut être asservi simplement au niveau du bief amont, rendant ainsi le dispositif opérant quelles que soient les conditions qui y régnent, sans aucune intervention d'opérateur (autre que de maintenance).

Lorsque l'on ne souhaite pas utiliser hydrauliquement l'intérieur de la colonne, celle-ci peut se réduire, schématiquement, aux génératrices sur lesquelles sont placés les dispositifs d'accrochage des bacs, et être remplacée, par exemple, par une couronne de pîeux.

Le cas d'un support à section non fermée est illustré sur la figure 6. Le dispositif est alors accroché au parement aval d'un barrage en béton armé, du type voûte. Le fait que ce support particulier ne soit ni prismatique, ni vertical, a pour seule conséquence que l'on doive y adapter soit l'inclinaison des faces in, soit le système d'accrochage, ce qui est sans incidence sur l'invention.
L'alimentation des bacs supérieurs peut dans ce cas, comme dans celui décrit ci-dessus (colonne-support indépendante du barrage principal), être réalisée à travers un système de conduits obturables, traversant la paroi du barrage, et mettant en communication le bac choisi avec le bief amont.
La pente de l'hélice directrice ainsi que les caractéristiques des orifices et seuils sont, dans tous les cas cités, qui ne sont pas limitatifs, choisies de manière à obtenir la vitesse moyenne d'écoulement et les turbulences recherchées, et en particulier, dans le domaine piscicole, celles convenant le mieux à la (ou aux) espèce(s) migrantes.

Dans une version préférée de l'invention (figure 7), des échancrures ménagées à la partie haute des parois Am et Av des bacs, forment seuil déversant, et sont associées à des orifices à contour fermé, situés en partie médiane ou basse des mêmes parois, dimensionnés de manière à créer localement une zone de contre-courant, ou de courant faible, en arrière de la mini-cascade. Seuils et orifices peuvent, sans que cela soit une caractéristique nécessaire de l'invention, être situés en alternance côté support ou côté extérieur, comme représenté sur la figure 8.

Dans une autre version de l'invention (figure 9), les ouvertures (d) (e) sont munies de dispositifs d'obturation partielle (h) permettant de faire varier à la demande les caractéristiques de l'écoulement. Ce peut être également le cas pour les échancrures (f) (g).

Dans une autre version de l'invention (figure 10), les orifices (d) et (e) sont de formes différentes sur les parois Am et Av.
Le croquis supérieur correspond à une pente faible de l'hélice (b). Les orifices (d), lorsqu'ils viennent en regard des orifices (e), offrent au fluide une section de passage maximale.
Sur le croquis inférieur, on a augmenté la pente de l'hélice directrice. Les orifices (d) s'en sont trouvés décalés vers le bas par rapport aux orifices (e) homologues, et la section de passage du fluide s'en est trouvée réduite.
Cette disposition particulière permet de faire varier, si on le désire, la forme et la surface utile de l'ouverture résultante en corrélation avec la pente moyenne de l'écoulement, en imposant aux points d'accrochage des bacs des translations verticales proportionnelles à N, ce qui modifie le pas de l'hélice directrice (b).
Elle permet également, a contrario (en utilisant d'autres formes d'orifices), de garder constante cette surface utile tout en modifiant la pente.

Les avantages de l'invention sont les suivants :
- La fondation de l'ouvrage, si elle est nécessaire (support indépendant de l'ouvrage principal), est ponctuelle et ne nécessite en général aucune emprise au-delà de celle de l'ouvrage principal. Elle peut être rendue insensible à l'érosion dûe à un déversement accidentel, ou résultant d'une crue séculaire ou millénaire, en la réalisant sur pieux, ce qui est rendu économique par la concentration des charges.
- Tous les constituants de l'ouvrage selon l'invention peuvent être préfabriqués, et même standardisés, abaissant ainsi sensiblement le prix de revient. La réalisation de plusieurs ouvrages au même standard, malgré des hauteurs différentes, permet d'assurer une maintenance centralisée et d'efficacité maximum.
- L'alimentation de l'ouvrage depuis le bief ou réservoir amont peut être rendue permanente quelles que soient les variations du niveau de celui-ci, et même automatisée.
- Le dispositif d'accrochage des bacs sur le support peut être conçu de manière à faire varier (de manière discrète en général, ou continue dans une certaine plage) le pas de l'hélice directrice, donc la pente moyenne de l'écoulement. Il suffit que les joints d'étanchéité s'écartent suffisamment du contour des orifices, et/ou que les goulottes et manchettes s'adaptent à de petites variations de niveau entre deux bacs successifs, pour que le dispositif reste opérant dans plusieurs configurations utilisées successivement, et ce de manière réversible.
   L'utilisation, dans ce cas, d'orifices de formes différentes sur les parois amont et aval des bacs, en combinaison avec des joints dimensionnés dans ce but, permet de faire varier corrélativement les deux paramètres principaux de l'écoulement (pente moyenne et calibrage des orifices) par la seule modification du pas de l'hélice directrice.
- Il n'existe en théorie pas de limite à la hauteur utile d'un ouvage réalisé selon l'invention, lequel pourra donc, à des hauteurs croissant avec l'expérience acquise, se substituer à des dispositifs du second type.

## Revendications

1. Structure en forme de bac quadrangulaire, ouvert vers le haut, dont deux faces opposées, amont et aval, sont munies d'orifices à leur partie médiane ou inférieure, et/ou d'échancrures à leur partie supérieure, et **caractérisée en ce qu'**associée à une série de structures analogues possédant également des orifices et/ou échancrures situés aux emplacements correspondants de leurs faces amont/aval, échelonnées le long d'une courbe directrice à pente sensiblement constante (hélice) tracée sur leur support latéral commun, elle constitue l'un des éléments d'un dispositif de type canal incliné, apte à laisser un fluide s'y écouler de manière contrôlée et sans déperdition notable de liquide, entre un bief ou réservoir amont, et un bief ou cours aval, sous l'effet de sa seule pesanteur et de la dissipation d'énergie provoquée par les turbulences générées par son passage au travers des orifices et échancrures.

2. Dispositif conforme à la revendication 1., **caractérisé par** des fixations sur le support permettant la réversibilité de l'accrochage.

3. Dispositif conforme à la revendication 1., **caractérisé par** des fixations sur le support permettant de faire varier, de manière réversible, la pente de l'hélice directrice.

4. Dispositif conforme aux revendications 2. et 3., **caractérisé par** la forme des orifices et/ou échancrures des parois des éléments, dessinées de manière à ce qu'une modification de la pente moyenne du dispositif entraîne ipso facto soit le maintien, soit une modification corrélative de la section utile de passage du fluide, par aveuglement partiel ou non des dits orifices/échancrures.

5. Dispositif conforme à une ou plusieurs des revendications 1. à 4., **caractérisé par** son accrochage soit à la périphérie d'une colonne verticale, dite colonne-support, dont tout ou partie du volume intérieur est en communication permanente avec le bief amont, soit à l'intérieur d'une cheminée verticale ménagée dans l'épaisseur de l'ouvrage à équiper, soit au parement aval de l'ouvrage de retenue à équiper,de manière à être alimenté sous faible charge, par des orifices ou conduits latéraux obturables, à l'altitude optimale pour son fonctionnement.

6. Dispositif conforme à une ou plusieurs des revendications 1. à 5., **caractérisé par** la répétition selon un ordre séquentiel le long de l'écoulement, de deux ou plusieurs schémas différents pour les orifices et/ou échancrures des faces amont / aval de ses éléments constitutifs.

7. Dispositif conforme à une ou plusieurs des revendications 1. à 5., **caractérisé par** la présence de vannettes ou de systèmes de réglage plus complexes, permettant de faire varier les caractéristiques de l'écoulement du fluide au travers des orifices et/ou échancrures.
